# EUROPEAN PATENT SPECIFICATION

(11) **EP 2 700 311 B1**
(45) Date of publication and mention of the grant of the patent: **19.04.2017**
(21) Application number: 13460047.7
(22) Date of filing: 22.07.2013
(51) Int. Cl.: A01N 33/12, A01N 43/653, C08L 97/02

(54) **A method of protecting plywood against fungi**
Verfahren zum Schutz von Sperrholz gegen Pilze
Procédé pour protéger le contreplaqué contre les champignons

(30) Priority: 23.07.2012 PL 40010312
(43) Date of publication of application: 26.02.2014
(73) Proprietor: Instytut Technologii Drewna, 60-654 Poznan (PL)
(72) Inventor: Zabielska-Matejuk, Jadwiga, 62-002 Suchy Las (PL); Pernak, Juliusz, 60-573 Poznan (PL); Józwiak, Mariusz, 61-558 Poznan (PL); Kot, Mariusz, 61-647 Poznan (PL)
(74) Representative: Piatkowska, Elzbieta

(56) References cited:
- EP-A1- 0 533 017
- EP-A2- 0 781 637
- WO-A2-2006/118980
- PL-A1- 379 415
- PL-A1- 393 431
- Iwona Frackowiak ET AL: "APPLICATION OF AMMONIUM IONIC LIQUIDS IN PARTICLEBOARD TECHNOLOGY", Drewno. Pr. Nauk. Donies. Komunik, 1 January 2010 (2010-01-01), XP55094715, Retrieved from the Internet: URL:http://yadda.icm.edu.pl/yadda/element/ bwmeta1.element.dl-catalog-65b07956-fc9a-4 af7-bab4-f12ca4c71780/c/download.pdf [retrieved on 2014-01-03]
- Andrzej Fojutowski ET AL: "THE ASSESSMENT OF MECHANICAL PROPERTIES OF WOOD TREATED WITH IONIC LIQUIDS", Drewno. Pr. Nauk. Donies. Komunik., 1 January 2010 (2010-01-01), XP55094714, Retrieved from the Internet: URL:http://yadda.icm.edu.pl/yadda/element/ bwmeta1.element.baztech-article-BAT8-0017- 0027/c/httpwww_bg_utp_edu_plartd20nr20184d rewnovol53nr184a_fojutowskia_noskowiakm_ko ta_kropacza_stangierska.pdf [retrieved on 2014-01-03]

## Description

The invention relates to a method of protecting plywood against fungi by using ionic liquids.

If used in high-moisture conditions in particular, plywood undergoes the processes of biological decay due to microorganisms, as is the case with wood. It is also vulnerable to mould fungi causing surface discoloration, as well as to wood-decay fungi. For this reason, protected plywood is manufactured for the specific applications of transport, construction, railway and boatbuilding industries.

In order to provide protection, plywood is subjected to a process of pressure impregnation, vacuum pressure impregnation, or pressureless impregnation (baths), also accompanied by a fire-retardancy protection process. Other methods are also known, such as coating the outer layers of plywood with laminate, varnish and paint, pressing glue film onto these layers, and introducing a suitable preparation into the adhesive before assembly. Similar preparations to those that protect wood are used to impregnate plywood.

The methods of protecting plywood, especially against brown, white, and soft rot fungi, as well as from filamentous fungi, particularly mould and blue stain ones, are similar to those that are used for solid wood. Also protecting preparations are largely identical to the ones used to protect wood.

Since 1930's pentachlorophenol (PCP) has been the most common agent for protecting construction wood and plywood, being effective and relatively cheap. PCP was an active constituent of many agents protecting wood and plywood, such as the Xylamit liquids.

Patent description P-125128 discloses an agent for impregnating and protecting wood, containing borax, boric acid, salicylic acid or pentachlorophenol and ortho-phenylphenol sodium salts, as well as wood synthetic dyes. Because of its high toxicity, the use of PCP is not advisable and is being abandoned.

Water-soluble salt preparations are known to be used, ones which are aqueous solutions of inorganic compounds, particularly of fluorine, arsenic, chromium, zinc, copper, and boron compounds. Commonly known wood-protecting agents include Wolman salts, which, in addition to sodium fluoride, contain chromium compounds or chromium and arsenic compounds. A disadvantage of salt preparations is that they are highly leachable and toxic, as is the case with CCA (copper, chromium and arsenic) and preparations based on fluorine, while having a corroding effect on metals.

Agents protecting wood against fungi are introduced to plywood or onto its surface by means of surface methods, such as coating, brushing, spraying and pouring. Penetrating protection methods are also known as the processes of pressure, vacuum and pressure, pressure swing, and pressureless impregnation of assembled plywood, including hot and cold baths.

Terzi [Terzi E. Kartal S. White R. Shinoda K. Imamura Y. [2011]: Eur. J. Wood Prod. [69]: 41-51] described the vacuum pressure impregnation of assembled plywood with quaternary ammonium salts (QAC) in the form of didecyldimethylammonium chloride (DDAC) or with didecyldimethylammonium tetrafluoroborate (DBA). The process was carried out for 30 minutes with a underpressure of 53.3 kPa (400mm Hg) and 30 minutes with an overpressure of 196 kPa. On the one hand, the use of these salts requires a vacuum pressure method on account of their poor penetrating ability, which complicates the process of plywood manufacturing, and on the other hand, toxic dioxins are emitted when plywood containing chloride anion compounds is burnt.

Patent US 6444329 discloses a method of providing plywood protection as made from phenol, melamine, and urea resins, using complexing agents, such as ethylenediaminetetraacetic acid (EDTA), and nitryltriacetic acid (NTA). The preparation was admixed with the adhesive in the amount of 1-30 kg/m³ at a temperature of 5-85°C. However, it protects plywood mainly from wood-decay fungi.

A method of vacuum pressure impregnation of plywood veneers is known from patent US 6 818 317, using solutions of salt preparations, copper ammonium acetate (CAA) or copper ammonium carbonate (CAC), or a combination thereof, followed by a conventional making of plywood. These compounds require vacuum pressure impregnation and are easily leached.

It was the object of the invention to develop an effective and safe method of protecting plywood against fungi, particularly wood decay and mould fungi, by using agents safe for humans and the environment.

Tests unexpectedly proved ionic liquids with a nitrate(III) of general formula 1, 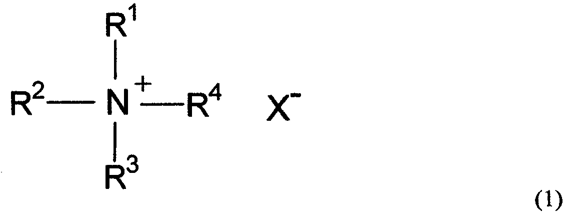 where
- R¹ is benzyl, an alkyl substituent of a carbon chain length of C₁₋₂₀, or an unsaturated hydrocarbon substituent of a carbon chain length of C₃₋₂₀, containing one or several unsaturated bonds,
- R² and R³ are equal and stand for an alkyl substituent of a C₁₋₁₆ carbon chain length or an unsaturated hydrocarbon substituent of a C₃₋₁₆ carbon chain length, containing one or several unsaturated bonds,
- R⁴ is an alkyl substituent of a carbon chain length of C₁₋₂₀ or an unsaturated hydrocarbon substituent of a carbon chain length of C₃₋₂₀, containing one or several unsaturated bonds,
- X is a nitrate (III),
to be effective and safe agents that fully protect plywood against microbiological mould and decay fungi.

The method of protecting plywood according to the invention is to impregnate plywood veneer with an ionic liquid solution of formula 1, where R¹, R², R³, R⁴ and X have the above meaning, in an adhesive resin, chosen from amongst polycondensation urea or melamine urea resins and to season the veneer impregnated in this way until the surface of the veneer is no longer sticky, indicating an air-dry state, which, depending on the seasoning conditions, usually takes 10 to 48 hours, and then, by means of known methods, to apply an adhesive used in production, and to form plywood so that the layers impregnated with the ionic liquid constitute the outer sides of the plywood assembly, with the impregnated surfaces to the outside, and the non-impregnated veneers constitute the inner layers, and then to hot-press the veneers using pressure to obtain plywood.

According to the invention, the method uses a homogenous ionic liquid of general formula 1, where R¹, R², R³, R⁴ and X have the above meaning, or a mixture of various ionic liquids of general formula 1, where R¹, R², R³, R⁴ and X have the above meaning.

What is meant by the homogenous ionic liquid is a liquid of general formula 1, where there is only one combination of the substituents R¹, R², R³, R⁴ and X of the above meaning, and by the mixture of ionic liquids a mixture in which there are various combinations of the substituents R¹, R², R³, R⁴ and X of the above meaning.

The method according to the invention uses 0.5-20 kg of the ionic liquid per 1 m³ of plywood, preferably 5 to 15 kg/m³.

As an adhesive resin according to the invention, the method uses polycondensation urea, melamine urea, and particularly melamine urea resins.

Fungicides used with the methods according to the invention may be introduced to the veneer by means of surface and penetrating methods. After introducing an active substance, veneers are seasoned, and plywood is made with a conventional method.

The plywood made by means of the method according to the invention is characterised by a high resistance to mould and decay fungi, complying with the requirements of the standards on bonding quality and hygiene properties.

Below are some advantages of the invention:
- Eliminating wood-protecting agents, dangerous to humans, such as:
- inorganic salts, containing the CCA compounds (copper, chromium, arsenic),
- aromatic organic compounds with chlorine substituted in the ring, such as pentachlorophenol (PCP),
- tar derivatives, such as creosote oil,
- quaternary salts containing a chloride anion, ones that emit highly toxic dioxins when the plywood protected by them is being burnt,

Below are some of the benefits provided by the use of ionic liquids, dissolved in chemosetting and thermosetting condensation resins:
- good penetration of the impregnating mixture containing ionic liquids into the plywood veneer,
- reduced leachability of the preparation introduced into the veneer due to the hardening of resin and the formation of film,
- enhanced aesthetics and better physical and mechanical properties of plywood, such as modulus of elasticity, hardness ensuring a high-quality assembly and hygiene properties, as well as improved dimensional stability of plywood and resistance to visible radiation and ultraviolet radiation.

The technology proposed makes it possible to conduct an impregnating process with gluing rollers within one plywood production line, thereby eliminating the above-mentioned, burdensome methods of protecting veneer (wood).

Below is an example that illustrates the procedure according to the invention.
The resistance of plywood to fungi was determined using the procedure in accordance with the PN-ENV 12 038.
And the resistance to filamentous fungi (mould fungi) was determined according to Instruction ITB No. 355/98 (1998): "Construction wood protection with chemical agents against biological corrosion. Requirements and tests". Building Research Institute, Typescript., Warszawa: 1-27. Resistance to two types of mould fungi was tested:
Set I - *Aspergillus niger* V. Tieghem, *Penicillium funiculosum* Thom, *Paecilomyces variotii* Bainer, *Trichoderma viride* Persoon ex Fries, *Alternaria tenuis* Link ex Fries,
   and
Set II - *Chaetomium globosum* Kunze.

### Example

In order to protect plywood against mould fungi, didecyldimethylammonium nitrate(III) [DDA][NO₂] was used, solved in a melamine-urea-formaldehyde resin (MUF) of a molar ratio of formaldehyde (F) to melamine (M) and urea (U) of 3.8:1.0:1.0 and of an apparent viscosity of 25-30 mPa, and of a dry substance content of approximately 51.0 %, and then an amount of 3% of the hardener NH₄NO₃ was added in relation to the dry substance of the resin. The concentration of the ionic liquid in the resin was approximately 15%, with the amount of the agent kept at a level of 12 kg per 1 m³ of beech wood. Next, the impregnated veneers were seasoned for at least 24 hours in a laboratory room at a temperature of 20 ± 2 °C and a humidity of 65 ± 5%.

To make plywood, the MUF adhesive resin was used. The adhesive was proportioned by weight on the surface of the sample being glued so that its amount applied corresponded to a unit of 180 g/m². Next, 3-layerd beech plywood assemblies were formed in such a way that the layers impregnated with the ionic liquid in the resin constituted the outer sides of a plywood assembly, with the impregnated surface to the outside. The assembly time was 24 h. In a laboratory room, the plywood assemblies were kept at a temperature of 20 ± 2 °C and a humidity of 65 ± 5%. Next, plywood was produced. The process of pressing was carried out at a temperature of 125 ± 1 °C for ten minutes with a unit pressure of 1.8 MPa.

An average surface coverage degree of mould fungi on the plywood samples of sets I and II was zero. The 3-layered beech plywood tested was fully resistant to being covered by mould fungi, with the outer veneer of the plywood protected by the ionic liquids introduced along with the MUF thermosetting resin.

A loss of mass of the plywood after a 16-week exposure was 5.7 %, and the DSI decay susceptibility index was 15.58.

Even though the inner veneer of the plywood was not protected, the result indicates a high resistance of the plywood to decay fungi.

The bonding quality and the hygiene properties of the plywood were determined independently. Shear strength was assessed to determine the bonding quality of the double shear plywood samples (Rₜ) according to EN-314-01 after of a test of changing cycles according to p.5.1.3. of the standard referred to (4 hours in water of 100 °C; dried for 20 hours in a drying chamber with a forced air circulation at a temperature of 60 ± 2 °C; immersed for 4 hours in water of a temperature of 100 °C, and for 2 hours in water of a temperature of 20 ± 2 °C). The Rₜ value was 2.83 ± 0.44 MPa when the sample was sheared in wood at a level of 86% (normative requirement - 1.0 MPa). When determined by means of the chamber method of PN-EN 717-1:2006, the emission of formaldehyde was 0.072 ppm. (normative requirement - 0.1 ppm). The fungicide did not affect the bonding quality or the formaldehyde emission from the samples tested, proving them to be in compliance with the requirements of waterproof plywood of class 3 according to EN-314-02.

### Example II

This example is only for comparison

In order to protect plywood against mould fungi, a 15% tebuconazole solution was used in an ionic liquid, didecyldimethylammonium nitrate(V) [DDA][NO₃], dissolved in the isopropyl alcohol. Beech veneers were impregnated on both sides, with the amount of the agent kept at a level of 4,5 kg/m³. Next, the impregnated veneers were seasoned for at least 48 hours in a laboratory room at a temperature of 20 ± 2 °C and a humidity of 65 ± 5%.

For gluing purposes, the MUF adhesive resin was used. The adhesive was proportioned 180 g/m² onto the impregnated veneers. Next, 3-layer and 7-layer beech plywood assemblies were formed from the veneers impregnated by means of a known method. The assembly time was 24 h. Next, plywood was produced. The process of pressing was carried out at temperature of 125 ± 1 °C for 10 and 20 minutes with a unit pressure of 1.8 MPa.

An average surface coverage degree of mould fungi on the plywood samples of set I was 2.08 in the case of the 3-layer plywood and 1.33 for the 7-layer plywood, and of set II 1.17 and 0 respectively.

A loss of mass of the 3-layer plywood after a 16-week exposure was 2,7 %, and the DSI decay susceptibility index was 7.82, and in the case the 7-layer plywood 2.5% and 11.97 respectively. Even though the inner veneer of the plywood was not protected, the result indicates a high resistance of the plywood to decay fungi.

The bonding quality and the hygiene properties of the plywood were determined independently. Shear strength (Rₜ) was assessed to determine the bonding quality of the double shear plywood samples according to EN-314-01 after the test of changing cycles according to p.5.1.3. of the standard referred to. The Rₜ value was 1.47 ± 0.43 MPa for the 3-layer plywood when the sample was sheared in wood at a level of 60% and for the 7-layer plywood 2.36 ± 0,43 MPa and 73% respectively (normative requirement - 1.0 MPa). Determined by means of the chamber method of PN-EN 717-1:2006, the emission of formaldehyde was 0.056 ppm. in the case of the 3-layer plywood (normative requirement - 0.1 ppm).

The fungicide did not affect the bonding quality or the formaldehyde emission from the protected 3 and 7 layer plywood tested, proving them to be in compliance with the requirements of waterproof plywood of class 3 according to EN-314-02.

### Example III

This example is only for comparison

In order to protect plywood against mould fungi, a 15% tebuconazole solution was used in an ionic liquid, didecyldimethylammonium nitrate(V) [DDA][NO₃]. The mixture of the ionic liquid with tebuconazole was dissolved in the MUF resin described in example I. A roller was used to apply the resin 150 g/m² onto one side, with the amount of the fungicide kept at a level of 4.5 kg per 1 m³ of the beech wood. The veneers were used as outer plywood layers. And the inner plywood veneers were prepared in the way presented in example II.

The impregnated veneers were left for at least 48 hours in a laboratory room at a temperature of 20 ± 2 °C and a humidity of 65 ± 5%.

For gluing purposes, the MUF adhesive resin was used. The adhesive was proportioned onto the impregnated veneers 180 g/m². Next, 3-layer and 7 -layer beech plywood assemblies were formed in such a way that the veneers impregnated with the ionic liquid in the resin were the outer sides of a plywood assembly, with the impregnated surface to the outside, and the inner part of the plywood were the veneers impregnated with the ionic liquid dissolved in the low-molecular alcohol. The assembly time was 24 h. Next, plywood was produced. The process of pressing was carried out at temperature of 125 ± 1 °C for 10 and 20 minutes with a unit pressure of 1.8 MPa.

An average surface coverage degree of mould fungi on the plywood samples of set I was 0.5 in the case of the 3-layer plywood and 1.5 for the 7-layer plywood, and of set II 0.1 and 0 respectively. The resistance of the plywood to mould fungi was considerably enhanced.

A loss of mass of the 3-layer plywood after a 16-week exposure was 8.7 %, and the DSI decay susceptibility index was 25.31, and in the case of the 7-layer plywood 9.3 and 44.87 respectively. It was indicated by the result that the resistance of the plywood to decay fungi improved considerably.

Shear strength (Rₜ) was assessed to determine the bonding quality of the double shear plywood samples according to EN-314-01 after of a test of changing cycles according to p.5.1.3. of the standard referred to. The Pₜ value was 1.55 ± 0.39 MPa for the 3-layer plywood when the sample was sheared in wood at a level of 45 %, and for the 7-layer plywood 2.46 ± 0.33 MPa and 68% respectively (normative requirement Rₜ > 1.0 MPa). Determined by means of the chamber method of PN-EN 717-1:2006, the emission of formaldehyde was 0.086 ppm in the case of the 3-layer plywood (normative requirement - 0.1 ppm).

## Claims

1. A method of protecting plywood against fungi, consisting of introducing a fungicide to a an adhesive resin, **characterised in that** an ionic liquids solution of formula 1 is made, 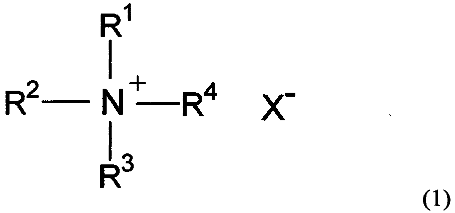 where
- X is nitrate(III) anion,
- R¹ is benzyl, an alkyl substituent of a carbon chain length of C₁₋₂₀, or an unsaturated hydrocarbon substituent of a carbon chain length of C₃₋₂₀ containing one or several unsaturated bonds,
- R² and R³ are equal and stand for an alkyl substituent of a C₁₋₁₆ carbon chain length or an unsaturated hydrocarbon substituent of a C₃₋₁₆ carbon chain length, containing one or several unsaturated bonds,
- R⁴ is an alkyl substituent of a carbon chain length of C₁₋₂₀ or an unsaturated hydrocarbon substituent of a carbon chain length of C₃₋₂₀, containing one or several unsaturated bonds,
in an adhesive resin, chosen from amongst polycondensation urea or melamine urea resins, and of applying the prepared ionic liquid solution in the resin by means of known methods onto the veneers intended for the outer plywood layers, with the inner veneers remaining not impregnated, and of forming and pressing the veneer assembly to obtain plywood.

2. The method according to claim 1 **characterised in that** an amount of 0.5 to 20 kg of the ionic liquid is used per 1 m³ of plywood.

3. The method according to claim 2 **characterised in that** an amount of 5 to 15 kg of the ionic liquid is used per 1 m³ of plywood.

4. The method according to claim 1 **characterised in that** melamine-urea resins are used.

## Patentansprüche

1. Verfahren zum Schutz der Sperrholzplatten gegen die Wirkung von Pilzen, bestehend in der Zugabe eines Fungizids in das Klebeharz, **dadurch gekennzeichnet, dass** eine Lösung ionischer Flüssigkeiten nach Formel 1 entsteht, 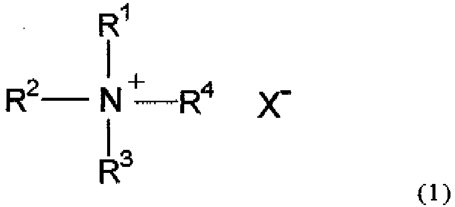 wobei
• X Nitratanion(III) ist,
• R¹ Benzyl oder Alkylsubstituent mit einer Länge der Kohlenstoffkette von C₁₋₂₀ oder ungesättigter Kohlenstoffsubstituent mit einer Länge der Kohlenstoffkette von C₃₋₂₀ mit einer oder mehreren ungesättigten Bindungen ist,
• R² und R³ gleich sind und einen Alkylsubstituenten mit einer Länge der Kohlenstoffkette von C₁₋₁₆ oder einen ungesättigten Kohlenstoffsubstituenten mit einer Länge der Kohlenstoffkette von C₃₋₁₆ mit einer oder mehreren ungesättigten Bindungen darstellen,
• R⁴ Alkylsubstituent mit einer Länge der Kohlenstoffkette von C₁₋₂₀ oder ungesättigter Kohlenstoffsubstituent mit einer Länge der Kohlenstoffkette von C₃₋₂₀ mit einer oder mehreren ungesättigten Bindungen ist,
und im Klebeharz, das aus den Harnstoff- und Melamin-Harnstoff-Polykondensationsharzen ausgewählt wurde, enthalten sind. Eine auf die Art und Weise vorbereitete Lösung ionischer Flüssigkeit im Harz wird auf bekannte Weisen auf Furniere für externe Schichten der Sperrholzplatten aufgetragen und die internen Furniere werden nicht imprägniert. Aus diesen Furnieren wird dann ein Sperrholzsatz für Sperrholzplatte formiert und gepresst.

2. Verfahren nach Anspruch 1 **dadurch gekennzeichnet, dass** die ionische Flüssigkeit in einer Menge von 0,5 bis 20 kg/m³ der Sperrholzplatte verwendet wird.

3. Verfahren nach Anspruch 2 **dadurch gekennzeichnet, dass** die ionische Flüssigkeit in einer Menge von 5 bis 15 kg/m³ der Sperrholzplatte verwendet wird.

4. Verfahren nach Anspruch 1 **dadurch gekennzeichnet, dass** Melamin-Harnstoff-Harze verwendet werden.

## Revendications

1. Procédé de protectionle contreplaqué contre les champignons consistant à introduire l'agent fongicide dans la résine adhésive **se caractérisant en ce qu**'on prépare la solution des liquides ioniques à la formule 1 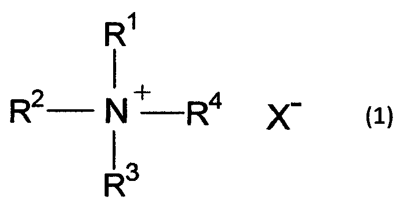 où
- X signifie l'anion nitrate (III),
- R¹ signifie le benzyle ou le substituant alkyle à la longueur de chaîne de carbone C₁₋₂₀ ou le substituant alkyle non saturé à la longueur de chaîne de carbone C₃₋₂₀ contenant une ou plusieurs liaisons non saturées,
- R² et R³ sont égaux et signifient le substituant alkyle à la longueur de chaîne de carbone C₁₋₁₆ ou le substituant alkyle non saturé à la longueur de chaîne de carbone C₃₋₁₆ contenant une ou plusieurs liaisons non saturées,
• R⁴ signifie le substituant alkyle à la longueur de chaîne de carbone C₁₋₂₀ ou le substituant alkyle non saturé à la longueur de chaîne de carbone C₃₋₂₀ contenant une ou plusieurs liaisons non saturées,
dans la résine adhésive, sélectionnée parmi les résines polycondensées formaldéhyde ou mélamine-formaldéhyde, et ensuite la solution des luiquides ioniques dans la résine ainsi préparée est appliquée de manières connues sur les bois de placage affectés aux couches extérieures du contreplaqué tandis que les placages intérieurs restent non impregnés dont est ensuite formé et moulé le kit de contreplaqué pour obtenir le contreplaqué.

2. Procédé selon la revendication 1 **se caractérisant en ce que** le liquide ionique est appliqué en quantité de 0,5 à 20 kg/m³ du contreplaqué.

3. Procédé selon la revendication 2 **se caractérisant en ce que** le liquide ionique est appliqué en quantité de 5 à 15 kg/m³ du contreplaqué.

4. Procédé selon la revendication 1 **se caractérisant en ce qu**'on applique les résines mélamine-formaldéhyde.
